Europäisches Patentamt

(19) European Patent Office

Office européen des brevets

(11) Veröffentlichungsnummer: **0 049 021**
**B1**

(12) **EUROPÄISCHE PATENTSCHRIFT**

(45) Veröffentlichungstag der Patentschrift:
16.05.84

(51) Int. Cl.³: **H 04 N 5/60**

(21) Anmeldenummer: **81201074.2**

(22) Anmeldetag: **28.09.81**

(54) Schaltungsanordnung für einen Empfänger von Zweiton/Stereo-Sendungen.

(30) Priorität: **01.10.80 DE 3036973**

(43) Veröffentlichungstag der Anmeldung:
**07.04.82 Patentblatt 82/14**

(45) Bekanntmachung des Hinweises auf die Patenterteilung:
**16.05.84 Patentblatt 84/20**

(84) Benannte Vertragsstaaten:
**AT BE CH DE FR GB IT LI NL SE**

(56) Entgegenhaltungen:
RUNDFUNKTECHNISCHE MITTEILUNGEN, Jahrgang 23, Heft 1, Februar 1979 MÜNCHEN (DE) M. AIGNER und R. GOROL: "Eine neue Stereomatrizierung für den Fernsehton" Seiten 10 bis 13
Funkschau 1974, Heft 1, Seiten 11-14

(73) Patentinhaber: **Philips Patentverwaltung GmbH, Billstrasse 80, D-2000 Hamburg 28 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **BE CH FR GB IT LI NL SE AT**

(72) Erfinder: **Buhse, Ulf, Am Deich 40, D-2201 Kollmar (DE)**
Erfinder: **Schwarz, Henning, Cronsberg 18, D-2057 Reinbek (DE)**

(74) Vertreter: **Hartmann, Heinrich, Dipl.-Ing. et al, Philips Patentverwaltung GmbH Billstrasse 80 Postfach 10 51 49, D-2000 Hamburg 28 (DE)**

## Schaltungsanordnung für einen Empfänger von Zweiton/Stereo-Sendungen

Die Erfindung betrifft eine Schaltungsanordnung nach dem Oberbegriff des Hauptanspruches.

In der Bundesrepublik Deutschland strahlen Fernsehsender nicht nur monophone Tonsignale aus, sondern auch stereophone Signale oder Zweiton-Signale. Bei Zweiton-Signalen werden beispielsweise zwei verschiedene Sprachen ausgestrahlt. Bei der Ausstrahlung von Zweiton/ Stereo-Sendungen werden zusätzlich auf einen Träger von ca. 54 kHz modulierte Signale mit einer Kennfrequenz (117 Hz für Stereo, 274 Hz für Zweiton) ausgestrahlt. In diesem Fall kann der Benutzer zwischen vier Empfangsarten wählen: Stereo — Mono — Ton A — Ton B, wobei Ton A und Ton B die beim Zweitonverfahren zu empfangenden Tonsignale bezeichnen sollen. Wie aus der Zeitschrift »Rundfunk Technische Mitteilungen«, Jahrgang 23, (1979), Heft 1, Seiten 10 bis 13, bekannt ist, wird bei Stereo-Sendungen auf dem einen Kanal das Summensignal und auf dem anderen Kanal die rechte Seiteninformation mit der doppelten Amplitude wie im Summensignal übertragen.

Aus der Zeitschrift »Funkschau« 1974, Heft 1, Seiten 11 bis 14, ist ein inzwischen überholter Vorschlag für die Übertragung von Zweiton/ Stereo-Sendungen, die von zwei verschiedenen Kennfrequenzen begleitet sind, bekannt, sowie ein Empfänger zum Empfang solcher Sendungen. Der Empfänger weist eine logische Verknüpfungsschaltung auf, die durch aus den Kennfrequenzen abgeleitete Kennsignale und das Ausgangssignal einer ersten bistabilen Kippschaltung steuerbar ist, die ihrerseits durch einen vom Benutzer betätigbaren Schalter steuerbar ist, und mit einer von der Verknüpfungsschaltung gesteuerten Umschaltvorrichtung zur Umschaltung auf die gewünschte Empfangsart.

Bei dem bekannten Empfänger hat der Benutzer bei Stereo-Sendungen keine Wahl, ob er eine Stereo-Sendung Mono wiedergeben lassen will oder nicht, weil die Verknüpfungsschaltung dann die Umschaltvorrichtung automatisch auf Stereo-Empfang umschaltet. Beim Empfang von Zweiton-Sendungen kann der Benutzer zwar mittels eines Schalters wählen, ob er Ton A oder Ton B empfangen will, jedoch kann diese Wahl verlorengehen, wenn der Sender zwischenzeitlich die andere Sendeart (stereo) ausstrahlt, weil die Umschaltvorrichtung dabei automatisch auf einen bestimmten Tonkanal umgeschaltet wird, der von der vorherigen Wahl unabhängig ist.

Es ist Aufgabe der vorliegenden Erfindung, eine Schaltungsanordnung mit freier Auswahl einer der vier möglichen Empfangsarten zu schaffen, die einfach aufgebaut, fehlerfrei bedienbar und leicht in integrierter Schaltungstechnik herstellbar ist und bei der eine einmal getroffene Wahl (z. B. Ton A) nicht verlorengeht, wenn der Sender zwischenzeitlich die andere Sendeart (Stereo) ausstrahlt.

Diese Aufgabe wird erfindungsgemäß dadurch gelöst, daß eine zweite bistabile Kippschaltung vorgesehen ist, deren Ausgangssignal ebenfalls die logische Verknüpfungsschaltung steuert, und die beiden Kippschaltungen durch die Kennsignale und den Schalter so gesteuert sind, daß bei Betätigung des Schalters und bei Vorhandensein der Stereo-Kennfrequenz die eine bistabile Schaltung kippt und die andere ihren Schaltzustand nicht ändert, und daß bei Betätigung des Schalters und bei Vorhandensein der zweiten Kennfrequenz die eine bistabile Kippschaltung ihren Schaltzustand nicht ändert und die andere kippt.

Mit Kennsignalen werden binäre Signale bezeichnet, die vom Vorhandensein der Kennfrequenzen abhängen. Im einfachsten Fall wird ein erstes Kennsignal durch das (Nicht-)Vorhandensein der Stereo-Kennfrequenz und ein zweites Kennsignal durch das (Nicht-)Vorhandensein der Zweiton-Kennfrequenz bestimmt. Jedoch sind auch andere Zuordnungen möglich. Auch die serielle Kennsignalerzeugung mit zumindest 2 bit ist denkbar.

Mit einem einzigen Schalter kann dabei der Benutzer einerseits von Mono auf Stereo (und umgekehrt) und andererseits von Ton A auf Ton B (und umgekehrt) umschalten. Bei Ausführung der Schaltung in integrierter Schaltungstechnik ist also auch nur für diesen einen Schalter ein äußerer Anschluß vorzusehen. — Jede der beiden bistabilen Kippschaltungen speichert die Wahl des Benutzers für jeweils eine der beiden Sendearten (Zweiton/Stereo). Weil in jeder der möglichen Sendearten jeweils eine der beiden bistabilen Kippschaltungen nicht gekippt werden kann, bleibt die für die Sendeart, der die betreffende bistabile Kippschaltung zugeordnet ist, getroffene Wahl erhalten. — Fehlbedienungen sind praktisch ausgeschlossen, weil eine Wahl nur für die jeweils tatsächlich ausgestrahlte Sendeart wirksam durchgeführt werden kann und weil nur ein einziger Schalter vorhanden ist.

Eine Weiterbildung der Erfindung sieht vor, daß jede bistabile Kippstufe als 1:2-Frequenzteiler geschaltet ist und daß der Schalter als Tastschalter ausgebildet ist. Wenn jede bistabile Kippstufe (in der Regel ein Flipflop) als 1:2-Frequenzteiler geschaltet ist, kann sie nur durch eine Flanke eines Steuersignals gekippt werden, so daß als Schalter ein Tastschalter verwendet werden kann, der vom Benutzer nur kurzzeitig betätigt wird und danach wieder in seine (unwirksame) Ausgangslage zurückkehrt. Der Tastschalter kann auch durch eine Schaltung realisiert werden, die mit einer vom Benutzer betätigbaren (Infrarot- oder Ultraschall-) Fernbedienungseinrichtung derart gekoppelt ist, daß sie bei Betätigung der Fernbedienungseinrichtung einen ersten binären Schaltzustand und bei Nichtbetätigung den zweiten Schaltzustand einnimmt.

Da beide bistabilen Kippschaltungen durch nur einen Schalter betätigt werden, ist es nicht möglich, von der Schalterstellung auf den Zustand der beiden bistabilen Kippstufen zurückzuschließen — schon gar nicht, wenn als Schalter ein Tastschalter verwendet wird. Um auch in diesem Fall dem Benutzer eine Anzeige der getroffenen Wahl zu ermöglichen, sieht eine Weiterbildung der Erfindung vor, daß die Verknüpfungsschaltung eine Anzeigeschaltung steuert, die zur Anzeige von vier Empfangsarten ausgelegt ist.

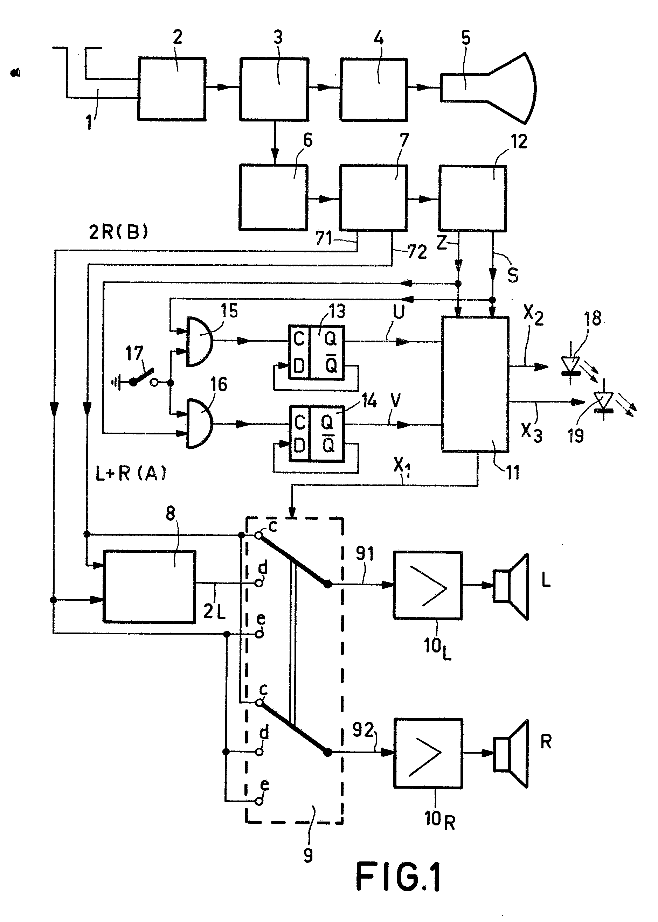

Die Erfindung wird nachstehend anhand eines in der Zeichnung dargestellten Ausführungsbeispiels näher erläutert. Es zeigt Fig. 1 das Blockschaltbild eines Fernsehempfängers mit einer erfindungsgemäßen Schaltungsanordnung,

Fig. 2 eine andere Ausführungsform,

Fig. 3 und 4 Wahrheitstafeln für die logische Verknüpfungsschaltung.

Das von einer Antenne 1 empfangene hochfrequente Signal wird im Hochfrequenzteil 2 verstärkt und mit einer Oszillatorfrequenz gemischt. Die dabei gebildete Zwischenfrequenz wird im Zwischenfrequenzteil 3 weiter aufbereitet und demoduliert. Das entstehende Videosignal 4 wird der Bildröhre 5 zugeführt.

Eine mit der Zwischenfrequenzstufe 3 gekoppelte Tonfrequenzstufe 6 filtert das Ton-Zwischenfrequenzsignal aus, das in einem Demodulatorteil 7 demoduliert wird. An den Ausgängen 71 und 72 des Demodulatorteils ergeben sich dann zwei Niederfrequenzsignale, wobei angenommen sei, daß am Ausgang 72 bei Stereo-Sendungen das Summensignal L + R und bei Zweiton-Sendungen das Signal Ton A anliegen möge, während am Ausgang 71 bei Stereo-Sendungen das Signal 2R und bei Zweiton-Sendungen das Signal Ton B anliegen soll.

Die beiden Ausgänge 71 und 72 sind mit den Eingängen c und e eines Umschalters 9 sowie mit den Eingängen einer Dematrizierschaltung 8 verbunden, die bei Stereo-Sendungen aus den beiden Eingangssignalen das Signal für den linken Kanal (2L) erzeugt und einem Eingang d des Umschalters 9 zuführt. An die Ausgänge 91, 92 des Umschalters 9 ist je ein Niederfrequenzverstärker $10_L$ bzw. $10_R$ angeschlossen, der einen Lautsprecher L bzw. R speist.

Der Umschalter 9 gestattet es, seine beiden Ausgänge 91 und 92 jeweils mit einem von drei Eingängen c, d, e zu verbinden. An dem Eingang c liegt bei Stereobetrieb das Summensignal und bei Zweitonbetrieb Ton A an. Am oberen Eingang d liegt bei Stereo-Sendungen das Signal 2L an, während am unteren Eingang d bei Stereo-Sendungen das Signal 2R anliegt. An den Eingängen e liegt bei Stereobetrieb das Signal 2R und bei Zweitonbetrieb Ton B an. Mit der gezeichneten Schalterstellung ist bei der Ausstrahlung von Stereo-Sendungen Mono-Empfang möglich, während bei Zweiton-Sendungen mit Ton A empfangen werden kann. Sind die Ausgänge 91 und 92 mit den Eingängen d verbunden, ist Stereoempfang möglich, während bei Verbindung mit den Eingängen e bei Zweiton-Sendungen Ton B empfangen werden kann. Die Stellung des Umschalters 9 und damit die jeweilige Empfangsart wird durch ein zumindest zwei Binärstellen umfassendes Datenwort $x_1$ bestimmt, das von einem logischen Verknüpfungsnetzwerk 11 geliefert wird. (Halbleiter-) Umschalter, deren Schaltstellung durch ein digitales Datenwort steuerbar ist, sind bekannt, z. B. die integrierte Schaltung TDA 1029 von Philips.

Die logische Verknüpfungsschaltung 11 besitzt vier Steuereingänge, von denen zwei mit einer Dekodierschaltung 12 gekoppelt sind, die an den Demodulator 7 angeschlossen ist und an deren beiden Ausgängen Kennsignale Z und S anliegen, die den Empfang einer Zweiton-(Z) bzw. einer Stereo-Sendung (S) kennzeichnen. Dabei möge Z = 1 das Vorhandensein eines Zweiton-Kennsignals kennzeichnen und S = 1 das Vorhandensein einer Stereo-Kennfrequenz.

Die beiden anderen Steuereingänge der logischen Verknüpfungsschaltung 11 sind mit den Ausgängen je einer bistabilen Kippschaltung 13 bzw. 14 verbunden, deren Ausgangssignale U bzw. V jeweils vom Schaltzustand der Kippschaltung abhängt. Die beiden bistabilen Kippschaltungen 13 und 14 können durch je ein einflankengetriggertes rückgekoppeltes D-Flipflop gebildet werden, dessen invertierter Ausgang auf den D-Eingang rückgekoppelt ist und dessen Takteingang an den Ausgang eines Und-Gatters 15 bzw. 16 angeschlossen ist. Ein Eingang des Und-Gatters 15, mit dessen Ausgang die bistabile Kippschaltung 13 verbunden ist, ist mit dem Ausgang der Dekodierschaltung 12 verbunden, der das Stereo-Kennsignal S führt, während das Zweiton-Kennsignal Z dem einen Eingang des Und-Gatters 16 zugeführt wird, dessen Ausgang mit der bistabilen Kippschaltung 14 verbunden ist. Der zweite Eingang des Und-Gatters 15 und des Und-Gatters 16 ist mit dem einen Pol eines Tastschalters 17 verbunden, dessen anderer Pol an Masse angeschlossen ist.

Wenn angenommen wird, daß die logische »1« 0 Volt entspricht und die logische »0« z. B. 12 Volt und wenn weiter angenommen wird, daß die bistabilen Kippschaltungen 13 bzw. 14 jeweils beim 0-1-Übergang kippen, dann kippt die Kippstufe 13 bzw. 14 beim Betätigen des Tastschalters 17, falls das Kennsignal S bzw. das Kennsignal Z 1 ist, d. h. wenn entweder eine Stereo-Sendung oder eine Zweiton-Sendung ausgestrahlt wird. Da immer nur eine dieser beiden Sendearten ausgestrahlt werden kann, kann beim Betätigen des Schalters 17 auch nur eines der beiden Und-Gatter 15 bzw. 16 von 0 nach 1 übergehen, wobei die nachgeschaltete Kippschaltung 13 bzw. 14 kippt. Ein erneutes Betätigen des Tastschalters 17 ruft ein nochmaliges Kippen dieser Kippstufe hervor, ohne die andere bistabile Kippschaltung zu beeinflussen.

Die Schaltung arbeitet folgendermaßen: Bei Mono-Sendungen gilt Z = S = 0. Die Gatter 15 und 16 sind gesperrt, so daß die Betätigung des Schalters 17 keinen Einfluß auf den Schaltzustand der bistabilen Kippschaltungen 13 und 14 hat. Beim Empfang einer Stereo-Sendung gilt Z = 0 und S = 1, so daß beim Betätigen des Tastschalters 17 der Ausgang des Und-Gatters 15 von 0 nach 1 geht, wobei die bistabile Kippstufe 13 kippt, z. B. von 0 nach 1. Beim erneuten Betätigen des Schalters 17 kippt die Kippstufe 13 wieder in ihren Ausgangszustand (von 1 nach 0) zurück. Bei einer Sendung nach dem Zweiton-Verfahren gilt Z = 1 und S = 0, so daß das Und-Gatter 15 gesperrt ist, während das Und-Gatter 16 von 0 nach 1 übergeht, wenn der Schalter 17 betätigt wird, so daß die daran angeschlossene bistabile Kippstufe 14 kippt. Der Schaltzustand U der bistabilen Kippstufe 13 kennzeichnet somit die Wahl des Benutzers für die Sendeart Stereo, während der Schaltzustand V der bistabilen Kippstufe 14 kennzeichnend für die Wahl des Benutzers bei der Sendeart Zweiton ist. Die einmal getroffene Wahl des Benutzers bleibt in den bistabilen Kippschaltungen gespeichert, bis die zugeordnete Sendeart gesendet wird und der Schalter 17 vom Benutzer 17 betätigt wird.

Anstelle eines rückgekoppelten D-Flipflops können als bistabile Kippschaltung auch andere Schaltungen verwendet werden, z. B. ein J, K-Flipflop, dessen J, K-Eingänge zusammengeschaltet sind, wobei ihnen entweder das Kennsignal Z oder das Kennsignal S zugeführt wird.

Da die vom Benutzer getroffene Wahl aus der Stellung des Tastschalters 17 nicht erkennbar wird, ist eine andere optische Anzeige erforderlich. Diesem Zweck dienen die beiden lichtemittierenden Dioden 18 und 19, die ebenfalls von der logischen Verknüpfungsschaltung 11 gesteuert werden, deren Ausgangssignale $x_2$ und $x_3$ die genannten Dioden auf nicht näher dargestellte Weise ein- bzw. ausschalten. Mit den beiden Dioden können vier Betriebsarten angezeigt werden: Stereo (beide Dioden eingeschaltet), Mono (beide Dioden ausgeschaltet), Ton A (Diode 18 ein, Diode 19 aus) und Ton B (Diode 18 aus, Diode 19 ein).

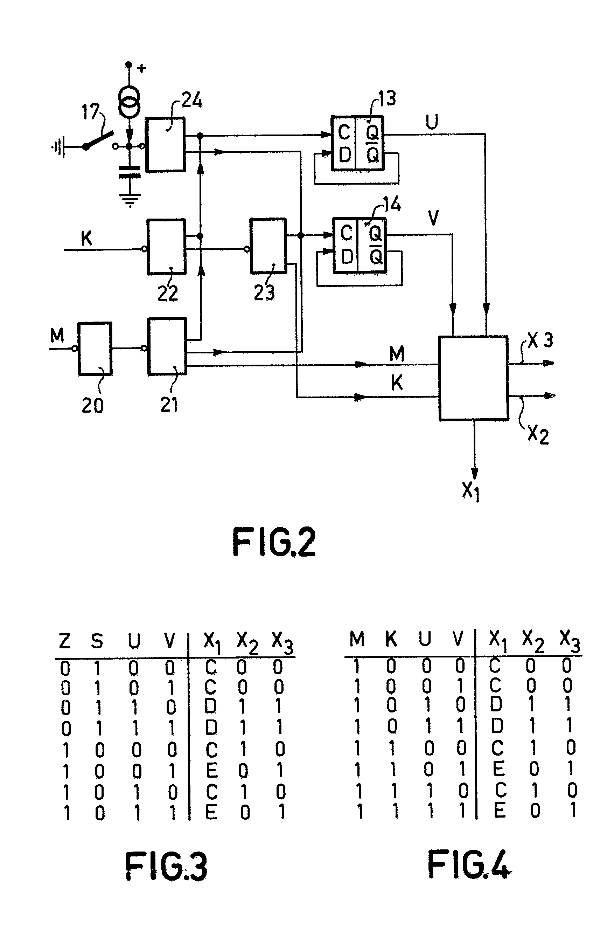

Fig. 3 zeigt die Wahrheitstafel der logischen Verknüpfungsschaltung 11. Dabei stellen C, D, E die Datenworte dar, die den Umschalter so steuern, daß die Eingänge c, d, e mit den Ausgängen 91 bzw. 92 verbunden werden. $x_2$ bzw. $x_3$ = 0 bedeutet, daß die Diode 18 bzw. 19 nicht eingeschaltet ist und $x_2$, $x_3$ = 1 bedeutet, daß die betreffende Diode eingeschaltet ist. Man erkennt, daß beispielsweise bei Stereobetrieb (S = 1) der Schaltzustand V der bistabilen Kippschaltung 14 keinen Einfluß auf die Ausgangssignale $x_1$, $x_2$, $x_3$ hat, während umgekehrt bei Zweitonbetrieb der Schaltzustand U der bistabilen Kippschaltung 13 ohne Einfluß auf die Ausgangssignale ist. Die Wahrheitstafel umfaßt nur die Hälfte der theoretisch denkbaren Eingangssignalkombinationen. Bei Z = S = 0 ist unabhängig von U und V $x_1$ = C und $x_2$, $x_3$ = 0, während die Eingangssignalkombination Z = S = 1 unmöglich ist, da nicht gleichzeitig stereophon und im Zweitonverfahren gesendet werden kann.

Die in Fig. 2 dargestellte Schaltung hat die gleiche Funktion wie die aus den Blöcken 13 . . . 17 bestehende Schaltung in Fig. 1. Im Aufbau bestehen folgende Unterschiede:

a) Der logischen 0 entsprechen 0 Volt, der logischen 1 entsprechen z. B. 12 Volt.

b) Anstelle der Kennsignale Z und S werden die Kennsignale K und M benutzt. M = 0 soll dabei bedeuten, daß das empfangene Signal keine Kennfrequenz enthält und M = L möge bedeuten, daß eine Kennfrequenz im Signal enthalten sei. Für den Fall M = 1 möge K = 0 Stereo- und K = 1 Zweiton-Betrieb bedeuten. Zur Erzeugung solcher Kennsignale muß der nicht näher dargestellte zugehörige Dekoder anders aufgebaut sein als in Fig. 1. Bei Verwendung einer digitalen Auswertung können sich die digitalen Kennsignale K und M aber auch unmittelbar ergeben.

c) Die Blöcke 20 . . . 24 sind invertierende Gatter, die durch den I²L-Herstellungsprozeß leicht herstellbar sind, wobei die Gatter 21 . . . 24 parallele, jedoch voneinander entkoppelte Ausgänge besitzen. Jeder Ausgang wird dabei von dem Kollektor eines Transistors gebildet, dessen Emitter geerdet ist. Die Versorgungsspannung $U_B$ entspricht logisch »1«. Ein invertierendes Gatter mit Mehrfach-Ausgängen wird durch einen Transistor mit mehreren Kollektorzonen gebildet. Wenn die Ausgänge mehrerer Gatter miteinander verbunden werden, kann die Ausgangsspannung nur dann $U_B$ (logisch »1«) betragen, wenn das Potential an jedem der Gatterausgänge $U_B$ beträgt; führt auch nur einer der Gatterausgänge 0 Volt, dann ergibt sich am gemeinsamen Verbindungspunkt stets 0 Volt. Die Verbindung von Gatterausgängen wirkt also in bezug auf die invertierten Eingangssignale als Und-Verknüpfung (sogenannte open-collectorlogic).

Die Schaltung arbeitet folgendermaßen: Bei Mono-Sendungen ist M = 0, so daß durch die zweimalige Invertierung auch die Ausgänge des Gatters 21 »0« sind. Durch ihre Verbindung mit den Takteingängen der Gatter 13 und 14 bleiben diese stets »0« unabhängig davon, ob z. B. der Tastschalter 17 betätigt wird oder nicht. Der Schaltzustand der bistabilen Kippschaltungen 13 und 14 bleibt somit erhalten. Bei Stereo-Empfang ist M = 1 und K = 0. Der Ausgang des Gatters 22, an dessen Ausgang das Kennsignal K anliegt, führt in diesem Fall eine »1« ebenso der Ausgang des Gatters 21. Wenn der Tastschalter 17 dann geschlossen wird, ist der Ausgang des damit gekoppelten Gatters 24 ebenfalls »1«, so daß am gemeinsamen Verbindungspunkt der Ausgänge der Gatter 21, 22 und damit am Takteingang der bistabilen Kippschaltung 13 ein Übergang von »0« nach »1« stattfindet. Wird der Tastschalter wieder geöffnet, geht dieses Signal auf »0« zurück und die bistabile Kippschaltung 13 kippt um. Die bistabile Kippschaltung 14 hingegen wird durch die Betätigung des Tastschalters 17 nicht beeinflußt, weil das Kennsignal K über das Gatter 22 zum nachgeschalteten Gatter 23 gelangt, an dessen Ausgang durch die zweimalige Invertierung somit wieder das Signal K ansteht, in diesem Falle also »0«, und dieser Ausgang mit dem Takteingang der bistabilen Kippschaltung verbunden ist. — Bei Zweiton-Betrieb (K = 1, M = 1) ist es gerade umgekehrt, weil dann der Ausgang des Gatters 22 »0« ist, so daß der damit verbundene Eingang der bistabilen Kippschaltung 13 blockiert wird, während in diesem Fall bei Betätigung des Tastschalters 17 die bistabile Kippschaltung 14 kippt.

In Fig. 4 ist die Wahrheitstafel der Schaltung in Fig. 2 dargestellt, allerdings nur für M = 1. Für M = 0 (Mono-Sendung ist stets $x_1$ = C und $x_2$ = $x_3$ = 0.

## Patentansprüche

1. Schaltungsanordnung zur Auswahl einer der vier möglichen Empfangsarten für einen Empfänger zum Empfang von Zweiton/Stereo-Sendungen, die von zwei verschiedenen Kennfrequenzen begleitet sind, mit einer logischen Verknüpfungsschaltung (11), die durch aus den Kennfrequenzen abgeleitete Kennsignale (Z, S bzw. M, K) und das Ausgangssignal (V) einer ersten bistabilen Kippschaltung (14) steuerbar ist, die ihrerseits durch einen vom Benutzer betätigbaren Schalter (17) steuerbar ist, und mit einer von der Verknüpfungsschaltung (11) gesteuerten Umschaltvorrichtung (9) zur Umschaltung auf die gewünschte Empfangsart, dadurch gekennzeichnet, daß eine zweite bistabile Kippschaltung (13) vorgesehen ist, deren Ausgangssignal (U) ebenfalls die logische Verknüpfungsschaltung steuert, und die beiden Kippschaltungen durch die Kennsignale (Z, S bzw. M, K) und den Schalter (17) so gesteuert sind, daß bei Betätigung des Schalters (17) und bei Vorhandensein der Stereo-Kennfrequenz die eine bistabile Schaltung (13) kippt und die andere (14) ihren Schaltzustand (V) nicht ándert, und daß bei Betätigung des Schalters (17) und bei Vorhandensein der zweiten Kennfrequenz die eine bistabile Kippschaltung (13) ihren Schaltzustand (U) nicht ändert und die andere (14) kippt.

2. Schaltungsanordnung nach Anspruch 1, dadurch gekennzeichnet, daß jede bistabile Kippstufe als 1 : 2-Frequenzteiler geschaltet ist und daß der Schalter als Tastschalter ausgebildet ist.

3. Schaltungsanordnung nach Anspruch 2, dadurch gekennzeichnet, daß als bistabile Kippstufe ein einflankengetriggertes rückgekoppeltes D-Flipflop dient, dessen Takteingang mit dem Schalter gekoppelt ist.

4. Schaltungsanordnung nach einem der vorhergehenden Ansprüche, dadurch gekennzeichnet, daß die Verknüpfungsschaltung eine Anzeigeschaltung steuert, die zur Anzeige von vier Empfangsarten ausgelegt ist.

## Claims

1. A circuit for selecting one of the four receiving modes for a receiver for receiving twin sound/stereo programmes which are accompanied by two different chracteristic frequencies, comprising a logic gate circuit (11) which is controlled by the characteristic signals (Z, S and M, K, respectively) derived from the characteristic frequencies and by the output signal (V) of a first bistable multivibrator circuit (14) which is controlled by a user-operable switch (17), and a change-over device (9) controlled by the gate circuit (11) for switching to the desired receiving mode, characterized in that a second bistable multivibrator circuit (13) is provided whose output signal (4) also controls the logic gate circuit, and the two multivibrator circuits are so controlled by the characteristic signals (Z, S and M, K respectively) and the switch (17) that when the switch (17) is operated and the characteristic stereo frequency is present one bistable circuit (13) changes state and the second bistable circuit (14) does not change its state (V), and that when the switch (17) is operated and the second characteristic frequency is present one bistable multivibrator circuit (13) does not change its state (4) and the other bistable multivibrator circuit (14) changes state.

2. A circuit as claimed in claim 1, characterized in that each bistable multivibrator circuit is connected as a divide-by-two divider and that the switch is in the form of a touch control switch.

3. A circuit as claimed in claim 2, characterized in that a feedback D-flip-flop the clock pulse input of which is coupled to the switch is used as a bistable multivibrator circuit.

4. A circuit as claimed in any of the preceding claims, characterized in that the gate circuit controls an indicator circuit which has for its purpose to indicate four receiving modes.

## Revendications

1. Dispositif de circuit destiné à sélectionner l'un des quatre modes de réception possibles pour un récepteur prévu pour recevoir des émissions à deux voies/stéréo auxquelles sont associées deux fréquences caractéristiques différentes, comportant un circuit logique (11) qui peut être commandé par des signaux caractéristiques (Z, S ou M, K) dérivés des fréquences caractéristiques et par le signal de sortie (V) d'une première bascule bistable (14) qui peut pour sa part être commandée par un interrupteur (17) pouvant être actionné par l'utilisateur et comportant un dispositif de commutation (9) commandé par le circuit logique (11) en vue de commuter sur le mode de réception souhaité, caractérisé en ce qu' une seconde bascule bistable (13) est prévue, le signal de sortie (U) de cette bascule commandant également le circuit logique, et les deux bascules sont commandées par les signaux caractéristiques (Z, S ou M, K) et par l'interrupteur (17) de telle sorte que, lorsque l'interrupteur (17) est actionné et lorsque la fréquence caractéristique stéréo est présente, la première bascule bistable (13) bascule et l'autre bascule (14) conserve son état de commutation (V) et lorsque l'interrupteur (17) est actionné et que la seconde fréquence caractéristique est présente, la première bascule bistable (13) conserve son état de commutation (U) et l'autre bascule (14) bascule.

2. Dispositif de circuit suivant la revendication 1, caractérisé en ce que la bascule bistable est branchée comme un diviseur de fréquence 1 : 2 et l'interrupteur a la forme d'un interrupteur à touche.

3. Dispositif de circuit suivant la revendication 2, caractérisé en ce qu'une bascule D à réaction déclenchée par un flanc sert de bascule bistable, son entrée d'horloge étant couplée à l'interrupteur.

4. Dispositif de circuit suivant l'une quelconque des revendications précédentes, caractérisé en ce que le circuit logique commande un circuit d'affichage qui est conçu pour afficher quatre modes de réception.

FIG.1

FIG.2

| Z | S | U | V | X₁ | X₂ | X₃ |
|---|---|---|---|---|---|---|
| 0 | 1 | 0 | 0 | C | 0 | 0 |
| 0 | 1 | 0 | 1 | C | 0 | 0 |
| 0 | 1 | 1 | 0 | D | 1 | 1 |
| 0 | 1 | 1 | 1 | D | 1 | 1 |
| 1 | 0 | 0 | 0 | CE | 1 | 0 |
| 1 | 0 | 0 | 1 | CE | 0 | 1 |
| 1 | 0 | 1 | 0 | CE | 1 | 0 |
| 1 | 0 | 1 | 1 | E | 0 | 1 |

FIG.3

| M | K | U | V | X₁ | X₂ | X₃ |
|---|---|---|---|---|---|---|
| 1 | 0 | 0 | 0 | C | 0 | 0 |
| 1 | 0 | 0 | 1 | C | 0 | 0 |
| 1 | 0 | 1 | 0 | CD | 1 | 1 |
| 1 | 0 | 1 | 1 | CD | 1 | 1 |
| 1 | 1 | 0 | 0 | CE | 1 | 0 |
| 1 | 1 | 0 | 1 | CE | 0 | 1 |
| 1 | 1 | 1 | 0 | CE | 1 | 0 |
| 1 | 1 | 1 | 1 | E | 0 | 1 |

FIG.4